# EUROPEAN PATENT SPECIFICATION

(11) **EP 2 424 197 B1**
(45) Date of publication and mention of the grant of the patent: **10.10.2018**
(21) Application number: 11179049.9
(22) Date of filing: 26.08.2011
(51) Int. Cl.: H04M 1/2745, G06F 3/048, G06F 3/0482, G06F 3/0485

(54) **System and method for providing a contact list input interface**
System und Verfahren zur Bereitstellung einer Kontaktlisten-Eingabeschnittstelle
Système et procédé pour la fourniture d'une interface d'entrée de liste de contacts

(30) Priority: 26.08.2010 KR 20100082888
(43) Date of publication of application: 29.02.2012
(73) Proprietor: Samsung Electronics Co., Ltd., Suwon-si, Gyeonggi-do, 443-742 (KR)
(72) Inventor: Kim, Tae Yeon, Gyeonggi-do (KR); Kim, Kyu Sung, Gyeonggi-do (KR)
(74) Representative: HGF Limited

(56) References cited:
- EP-A1- 1 832 846
- WO-A2-2006/037545
- US-A1- 2003 132 911
- US-A1- 2009 160 802

## Description

### BACKGROUND OF THE INVENTION

### 1. Field of the Invention

This invention relates to the field of mobile devices and, in particular to an interface for managing a contact list display in at least two view areas.

### 2. Description of the Related Art

As information, communication technology and semiconductor technology rapidly developed, the use of various types of mobile devices has also increased. Mobile devices utilize mobile convergence to provide additional service functions provided by other types of mobile systems, as well as the conventional service functions. For example, a mobile communication device includes multimedia functions as well as the usual communication functions, such as a voice call and message transmission and reception. Examples of the multimedia functions are a TV viewing function (e.g., mobile broadcasting, such as Digital Multimedia Broadcasting (DMB), Digital Video Broadcasting (DVB), etc.), an audio playback function (e.g., MPEG Audio Layer 3 (MP3)), a photographing function, an Internet access function, a dictionary browsing function, etc.

Conventional mobile devices do not provide a contact list registered in a phonebook in an intuitive display mode due to the restricted environment. For example, when mobile devices display a contact list, a list that belongs to a first level of a hierarchical structure is provided. Additionally, when a contact is selected from the list, the mobile devices provide only a list screen corresponding to a lower level of the select contact by altering what is displayed on the screen. Therefore, when users use a contact list, the user typically moves between an upper level and a lower level and the user must go back and further between the levels to obtain desired information regarding one or more contacts. In addition, since conventional mobile devices simple arrange a list screen, they do not provide an intuitive display.

WO 2006/037545 describes a mobile terminal including a Graphical User Interface for displaying a phone book. A first area displays a list of contacts which may be scrolled using a scroll bar, and when one of the entries is highlighted by a user, preview information is displayed in a second area. EP1832846 describes a navigation device in which a list of phone book entries displayed in a first area may be searched using a scroll wheel and detailed information of a selected entry may be displayed in a second area. US 2009/0160802 describes a portable terminal including a Graphical User Interface for selecting, using scroll icons, a contact from an address list displayed in a first area, and displaying user information of a selected contact and function icons in a second area.

Reference is also made to document US 2003/132911 A1 which describes a hierarchical phonebook, with more than two levels.

### SUMMARY OF THE INVENTION

The invention has been made in view of the above problems, and provides an additional function for user convenience in a mobile device.

The invention further provides a mobile device that displays upper and lower levels via two separate view areas on a screen, and a method for controlling the device. In one aspect of the invention, which is described herein, the mobile device includes a touch-based screen input. However, the invention is also applicable to other types of input means (e.g., voice, proximity).

The invention further provides an interface environment where upper and lower levels are displayed via at least two separate view areas on a screen, when a touch device provides a contact list, thereby controlling adaptive switching and scrolling operations between the upper and lower levels, according to a user's interaction.

The invention further provides an environment where a touch device provides a contact list for enhancing the user's convenience.

The invention is set out in the independent claims 1 and 13, preferred forms being set out in the dependent claims 2 to 12 and 14 to 16.

### BRIEF DESCRIPTION OF THE DRAWINGS

The features and advantages of the invention will become more apparent from the following detailed description in conjunction with the accompanying drawings, in which:
FIG. 1 illustrates a schematic block diagram of a touch device according to an embodiment of the invention;
FIGS. 2 and 3 illustrate contact list screens provided by a touch device according to an embodiment of the invention;
FIGS. 4 to 9 illustrate screens that show control operations for scrolling a contact list according to a user's interactions in the touch device according to an embodiment of the invention;
FIGS. 10 to 12 illustrate screens that show an embodiment of an operation for managing a contact list according to the invention;
FIGS. 13 and 14 illustrate screens that show another embodiment of an operation for managing a contact list according to the invention;
FIGS. 15 and 16 illustrate a flowchart that describes a method for providing a contact list in a touch device according to an embodiment of the invention; and
FIG. 17 illustrates a flowchart that describes a method for scrolling a contact list in a touch device according to a user's interaction, according to an embodiment of the invention.

### DETAILED DESCRIPTION OF THE INVENTION

Exemplary embodiments of the invention are described in detail with reference to the accompanying drawings. The same reference numbers are used throughout the drawings to refer to the same or similar parts. Detailed descriptions of well-known functions and structures incorporated herein may be omitted to avoid obscuring the subject matter of the invention.

The invention relates to a contact list-providing system and method that allows a touch device with a touch-based input interface to effectively display and manage a contact list. The contact list-providing system and method can display a contact list provided by a touch device, together with an upper level list and a lower level list via at least two separate view areas. In an embodiment of the invention, a contact list screen is divided into a list view area and a detail view area. The list view area shows the upper level list and the detail view area shows the lower level list.

In an embodiment of the invention, when information to be displayed on the detail view area is the lowest level, the detail view area is divided into at least two view areas. However, when information to be displayed on the detail view area is not the lowest level, the detail view area is displayed as one area. Switching between the upper level and the lower level, scrolling on a list view area or a detail view area, outputting a pop-up message, etc. can be controlled according to a user's interactions applied to either the list view area or the detail view area.

In the following description, the configuration of the touch device according to embodiments of the invention and the method for controlling the touch device will be explained in detail. It should, however, be understood that the invention is not limited to the following embodiments and that modifications of the described embodiments have been contemplated and considered with the scope of the invention, as recited in the appended claim section.

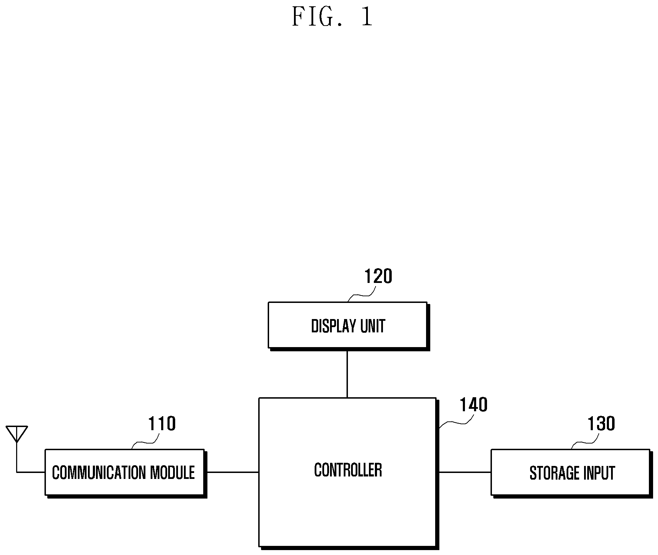

FIG. 1 illustrates a schematic block diagram of a touch device according to an embodiment of the invention.

Referring to FIG. 1, the touch device includes a communication module 110, a display unit 120, a storage unit 130 and a controller 140. It will be noted that the touch device may include an audio processing unit with a microphone and a speaker, a digital broadcast module for receiving and playing back mobile broadcasting (e.g., Digital Multimedia Broadcasting (DMB), Digital Video Broadcasting (DVB), etc.), a camera module for photographing pictures/video, a Bluetooth communication module, a touchpad, etc., which are well-known to an ordinary person skilled in the art and thus will not be described in the following description.

The communication module 110 supports a mobile communication service and/or an Internet service. The mobile communication service is based on mobile communication. The Internet service is based on a Wireless Local Area Network (WLAN) and may be a Wi-Fi service, for example. The communication module 110 may be implemented with an RF module for performing mobile communication or a WLAN module for performing WLAN based Internet communication, which can be supported by the touch device. Alternatively, the touch device may include both the RF module and the WLAN module. On the other hand, the touch device may also support mobile communication service and Internet service by communicating with a network via the communication module 110.

The display unit 120 displays screens when applications are executed in the touch device. The applications execute, for example, messages, emails, Internet, multimedia, browsing, communication, e-book, photographing, videos, playing back photographs/video, TV viewing (e.g., mobile broadcasting such as DMB, DVB, etc.), audio playback (e.g., MP3 files), widget, note, gaming, etc. The display unit 120 may be implemented with a Liquid Crystal Display (LCD), an Organic Light Emitting Diode (OLED), an Active Matrix Organic Light Emitting Diodes (AMOLED), or the like. The display unit 120 may display a screen associated with one or more of the executed applications in a landscape mode or portrait mode according to the rotation direction of the touch device.

In an embodiment of the invention, the display unit 120 may include an interface that supports a touch-based input function. For example, when the display unit 120 is implemented with a touch screen, it receives a user's interaction, creates an input signal corresponding in response to the interaction, and transfers the created input signal to the controller 140.

The display unit 120 displays a contact list via at least two separate view areas. The display unit 120 displays screens when a user's interaction (contact with, or proximity to, the display unit touch area) is applied to the contact list in a touch manner. The configuration of a contact list screen displayed on the display unit 120 and the screens controlled according to a user's interaction will be described later.

The storage unit 130 stores data and programs (not shown) that are executed in the device. The storage unit 130 is comprised of at least one or more volatile memory devices and non-volatile memory devices. The storage unit 130 may permanently or temporarily store an Operating System (OS) of the touch device, data and programs related to the display control of the display unit 120, data and programs related to the input control via the display unit 120, and data and programs related to the operation of a contact list, etc. In an embodiment of the invention, the storage unit 130 stores information regarding at least one contact registered via a phonebook menu, e.g., contact information. The storage unit 130 also stores a contact list comprising at least one contact. The storage unit 130 may also store messages transmitted/received according to the use of a Social Network Service (SNS), and data related to the use of SNS.

The controller 140 controls the operation of the touch device. The controller 140 controls the display of a contact list and the operations for the management of the contact list. For example, when the controller 140 provides a contact list of a user's phonebook menu on a screen, the controller 140 can display an upper level list and a lower level list via at least two separate view areas (e.g., a list view area and a detail view area). That is, the controller 140 displays a contact list screen via a list view area and a detail view area, i.e., the upper level list on the list view area and the lower level list on the detail view area. The controller 140 can adaptively control switching between the upper level and the lower level, and scrolling in either the list view area or the detail view area, etc., according to a user's interaction applied to the corresponding list view area or the detail view area. This control operation of the controller 140 will be described in detail in the following section where the operation of the touch device and the method for controlling the touch device are explained.

The controller 140 also controls the operations related to the usual functions of the touch device. For example, when the controller 140 executes an application, the controller 140 controls the operations and execution of the application and the display of corresponding data. The controller 140 receives input signals according to a variety of input means that the touch-based input interface supports (e.g., keypad, touch-sensitive display, voice activation, etc.), and controls corresponding functions. The controller 140 processes data transmission and reception (e.g., message transmission and reception, etc.) by using an Internet service (e.g., SNS, etc.) based on WLAN or mobile communication. The controller 140 also tracks and groups transmitted and/or received data and then displays the transmitted and/or received data on the screen. In one example, the data may be presented on the screen in a pop-up mode.

The touch device of the invention as shown in FIG. 1 can be applied to all types of mobile devices with a touch-based input interface, for example, a bar type, a folder type, a slide type, a swing type, a flip-flop type, etc. The touch device according to the invention includes all types of information communication devices, multimedia devices, and their applications, which are operated according to communication protocols corresponding to a variety of communication systems. For example, the touch device can be applied to mobile communication terminals, tablet personal computers, Portable Multimedia Players (PMPs), digital broadcast players, Personal Digital Assistants (PDAs), audio players (e.g., MP3 players), mobile game players, netbook computers, smartphones, etc. In addition, the method for providing contact lists and the method for managing contact lists, according to the invention, can be adapted to televisions, Large Format Displays (LFDs), Digital Signages (DSs), media poles, laptop computers, etc.

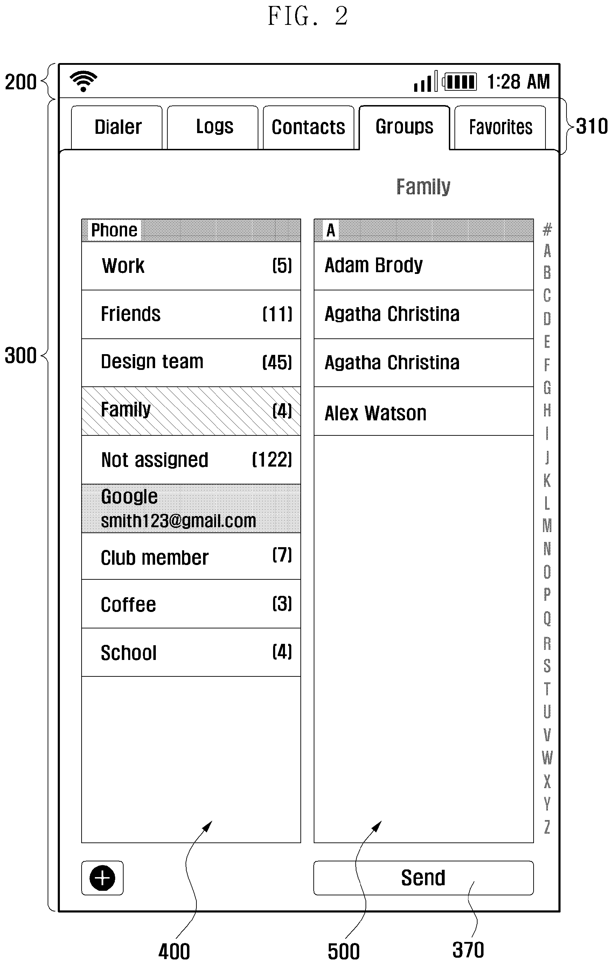

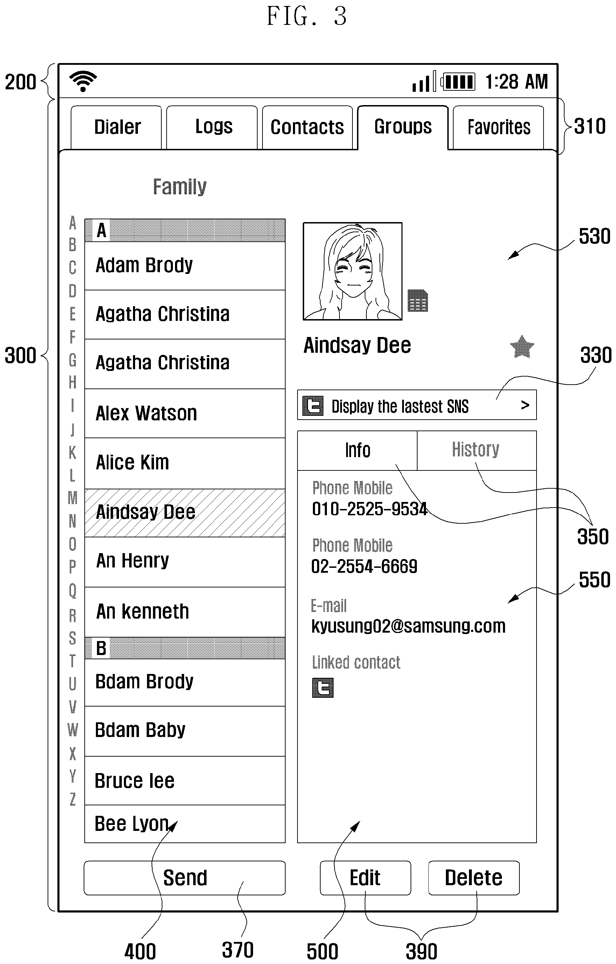

FIGS. 2 and 3 illustrate contact list screens provided by a touch device according to an embodiment of the invention.

Referring to FIGS. 2 and 3, the display unit 120 is divided into an indicator area 200 and an execution screen area 300.

The indicator area 200 displays the state information regarding the touch device. In an embodiment of the invention, the state information is provided via items such as a stationary icon, a moving icon, text, etc. The indicator area 200 displays at least one item of state information. Examples of the state information items are an item indicating received signal strength, an item indicating message reception, an item indicating vibration/sound/silent information, an item indicating Bluetooth status information, an item indicating Wi-Fi status information, an item indicating remaining battery capacity, an item indicating time information, etc. The indicator area 200 arranges and displays one or more items listed above, according to the preferences set by the user or the device manufacturer or both. It will be noted that the invention is not limited to the state information items described. That is, it should be understood that the indicator area 200 may also display various types of items other than the state information items referred-to above.

The execution screen area 300 displays screens when applications are executed in the touch device. For example, the execution screen area 300 displays a contact list of a phonebook menu on the screen. The configuration of a screen on which a contact list is provided is described below.

Referring to FIGS. 2 and 3, the area of the contact list screen, or the contact list screen, is divided into a list view area 400 and a detail view area 500. The list view area 400 shows an upper level list. The detail view area 500 shows a lower level list (refer to FIG. 2) for a particular contact included in the upper level list or detailed information (refer to FIG. 3) for a particular contact.

In this description, a list shown on the list view area 400 is called an 'upper level list,' and a list shown on the detail view area 500 is referred to as a 'lower level list.' When a lower level list in the detail view area 500 is moved to the list view area 400, it is called an upper level list.

In an embodiment of the invention, examples of the detailed information may be contact information set with respect to a particular contact in the contact list. For example, the particular contact may be a user's image, a user name, various types of phone numbers (e.g., mobile phone numbers, home phone numbers, office phone numbers), etc.; an email address; link contact information according to an Internet service (e.g., ID information, home address, memo, etc., of other users who are shared or connected with the user via messenger, Facebook, Twitter, etc., based on Internet services). The detailed information (contact information) is divided into representative information and additional information. The representative information refers to information (e.g., a user's image, a user's name, etc.) set to more intuitively recognize a contact of the detailed information. The additional information refers to information, additionally set for a contact detail. For example, the additional information may include phone numbers, an email address, link contact information, home address, memo information, etc. of users. The detailed information, representative information, and additional information may be variously set according to a user's settings.

The list view area 400 shows a list that is present in further detail on a lower level of a particular contact as shown in FIG. 2 or detailed information corresponding to the lowest level of a particular contact as shown in FIG. 3. For example, FIG. 2 illustrates high level categories in which one or more contacts may be associated with. In this illustrative case, the phone menu is composed of 5 contacts in the Work category, 11 contacts in the Friends category, 45 contacts in the Design Team category. In addition, a selected category (Family), as represented by the hashed lines, causes details of the Family category to be displayed in the detail view area 500. In this case, there are 4 contacts in the Family category.

Thus, when a particular contact is selected according to a user's interaction, the touch device checks a lower level of the contact. When the checked lower level is the lowest level detailed information regarding the contact is shown on the detail area 500. When the checked lower level is not the lowest level, a still lower level list is shown on the list detailed view area 500.

The detail view area 500 may be divided into a first information display area 530 and a second information display area 550 (see FIG. 3) in order to display detailed information regarding a particular contact.

As shown in FIG. 3, the detail view area 500 receives detailed information corresponding to the lowest level of a particular contact and shows representative information regarding the particular contact from among the detailed information via the first information display area 530 and additional information regarding the particular contact from among the detailed information via the second information display area 550.

In this illustrated case, the first information display area 530 refers to a fixed area wherein a scroll control is not executed when a user's interaction is detected in this area and the second information display area 550 refers to an area where a scroll control can be performed by a user's interaction.

As described above, the contact list screen is divided into the list view area 400 and the detail view area 500. The list view area 400 shows a list corresponding to an upper level of a contact list. The detail view area 500 shows a list corresponding to a lower level of a particular contact on one area. Alternatively, the detail view area 500 may show detailed information corresponding to still lower level information associated with a particular contact on the first and second information display areas 530, 550, respectively.

The contact list screen may display items corresponding to a variety of functions. For example, as shown in FIGS. 2 and 3, the contact list screen displays menu tabs 310 may be comprised of menu items to select types of contacts in the list; an SNS function item 330 that tracks messages via SNS between the user and another user corresponding to a contact and displays them in a pop-up way; a function item 350 that toggles additional information regarding a contact, and history information regarding communication (message transmission and reception history, receiving and outgoing call history, etc.) between a user and a contact currently shown on the detail view area 500; a function item 370 to connect to a selected contact (e.g., a contact that is highlighted, as presented by the hashed box); a function item 390 to edit or delete a contact shown in the current detail view area 500; etc. As shown in FIGS. 2 and 3, items associated with reference numbers 330 to 390 may be shown in various forms and positions according to the display types of the contact list.

As described above, the touch device displays the contact list as an upper level list and a lower level list via at least two separate view areas (e.g., a list view area 400 and a detail view area 500). When the lower level list, shown on the detail view area 500, is included in the lowest level, the lower level list may correspond to detailed information (e.g., contact information registered in a phonebook, etc.) regarding a particular item. When providing the detailed information, the detail view area 500 intuitively displays contact information (e.g., a user's image, phone numbers, an email address, link information according to the use of Internet services, etc.) via the first and second information display areas 530, 550, respectively.

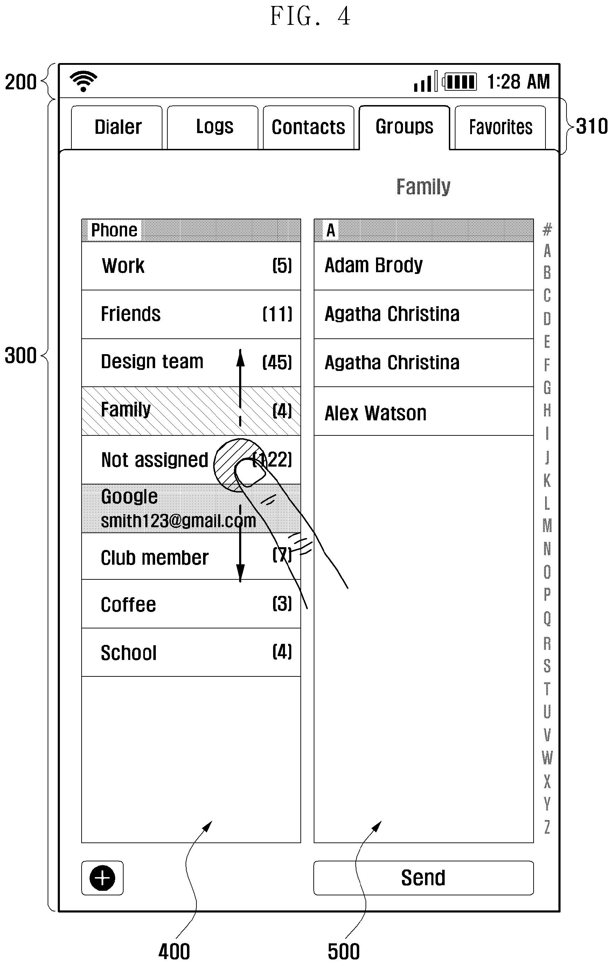

FIGS. 4 to 9 illustrate screens that describe control operations for scrolling a contact list according to a user's interactions in the touch device according to an embodiment of the invention.

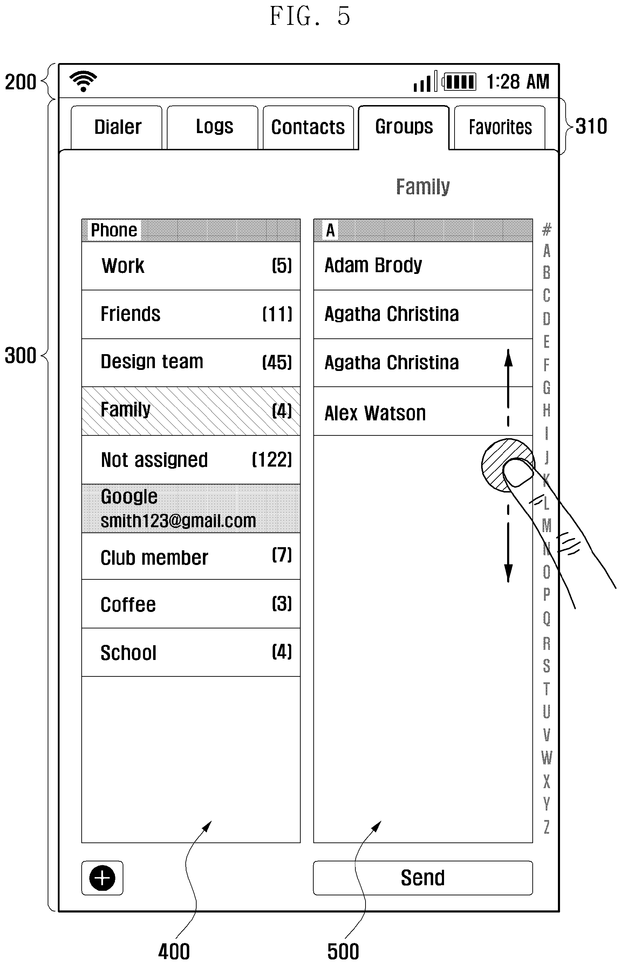

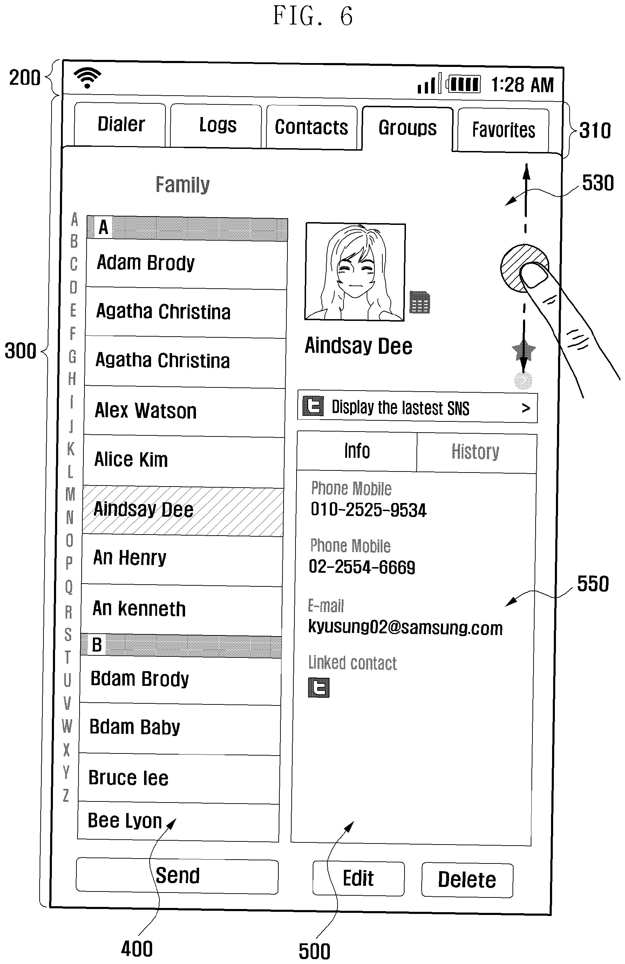

FIGS. 4 and 5 show screens that describe scroll control operations when a contact list is provided to a list view area 400 and a detail view area 500 as shown in FIG. 2. FIGS. 6 to 9 show screens that describe scroll control operations when a contact list is provided to a list view area 400 and a detail view area 500 comprised of a first information display area 530 and a second information display area 550, as shown in FIG. 3.

Referring to FIGS. 4 and 5, the detail view area 500 shows a lower level list for a particular category of contacts that is highlighted (i.e., Family) and activated in the list view area 400. As such, when the contact list is displayed, the user can scroll in the upper list in the list view area 400 or the lower list in the detail view area 500.

As shown in FIG. 4, the user applies an interaction (e.g., sweep interaction, as indicated by the hashed circle) within the list view area 400 in a preset direction (e.g., vertical direction, as indicated by the upward arrow extending form the hashed circle) in order to scroll the upper list in the list view area 400. The controller 140 controls the scrolling of the list on the list view area 400 according to the user's applied interaction and displays a corresponding screen (e.g., contacts are moved in the upward or downward direction on the list view area 400). During this process, the controller 140 does not scroll the list on the detail view area 500. That is, the user's interaction applied to the list view area 400 is effective to scroll only the list in the list view area 400 and does not affect the list in the detail view area 500.

As shown in FIG. 5, the user applies an interaction (e.g., sweep interaction, as indicated by the hashed circle) onto the detail view area 500 in a preset direction (e.g., vertical direction as indicated by the upward arrow) in order to scroll the lower list in the detail view area 500. The controller 140 controls the scrolling of the list on the detail view area 500 according to the user's applied interaction and displays a corresponding screen (e.g., contacts are moved in an upward or downward direction on the detail view area 500 dependent upon the user's motion). During this process, the controller 140 does not scroll the list on the list view area 400. That is, the user's interaction applied to the detail view area 500 is effective to scroll only the list in the detail view area 500 and does not affect the list in the list view area 400.

Referring to FIGS. 6 to 9, the list view area 400 shows detailed information regarding the lowest level via the first information display area 530 and the second information display area 550 of the detail view area 500 of a particular contact highlighted in the upper level list 400. In this case, the highlighted contact is indicated by the hashed box (i.e. Aindsay Dee).

As such, when the contact list is displayed, the user can scroll the list in the list view area 400 or the list in the detail view area 500. Since the operation of scrolling the upper list in the list view area 400 shown in FIGS. 6 to 9 is the same as that shown in FIGS. 4, it will not be described in the following description.

As shown in FIG. 6, the user may input an interaction (e.g., sweep interaction, i.e., hashed circle) for controlling a scrolling operation in the first information display area 530 of the detail view area 500. When the detail view area 500 is divided into the first and second information display areas, 530, 550, respectively, and the controller 140 senses a user's interaction for controlling a scrolling operation in the first information display area 530, the controller 140 ignores the interaction, in this illustrative example. That is, since the first information display area 530 shows the entire representative information, i.e., there is no information to be scrolled. Thus, the scrolling operation is not needed in the first information display area 530. Therefore, although a sweep interaction occurs on the first information display area 530, as indicated by the upward and downward arrows, the sweep interaction is ignored. That is, the controller 140 detects an area where an interaction for controlling a scrolling operation starts in the detail view area 500. When the controller 140 ascertains that an area where an interaction for controlling a scrolling operation starts is in the area 530, the controller 140 ignores the interaction and does not perform a scrolling operation.

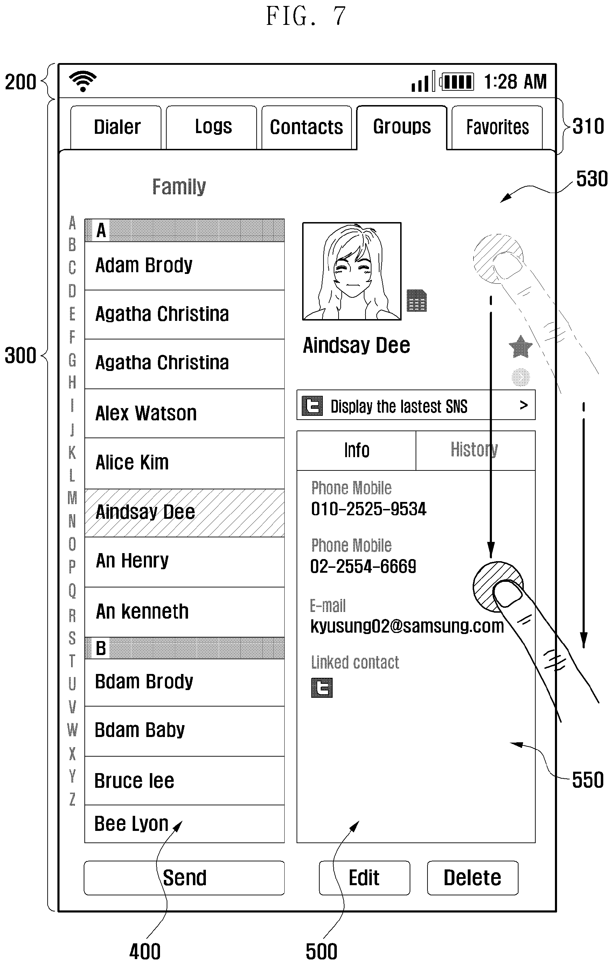

In a state where the scrolling operation is controlled as shown in FIG. 6 (the user's interaction is ignored), the user moves his/her interaction to the second information display area 550 as shown in FIG. 7. In that case, the controller 140 continues to disenable the scrolling operation according to the interaction that started from the first information display area 530. That is, the controller 140 detects an area where an interaction for controlling a scrolling operation starts in the detail view area 500. When the controller 140 ascertains that an area where an interaction for controlling a scrolling operation starts is in the first information display area 530, the controller, in this illustrative embodiment, continues to ignore the interaction. When the user's interaction that started in the first information display area 530 moves to the second information display area 550, the controller 140 continues to ignore the interaction.

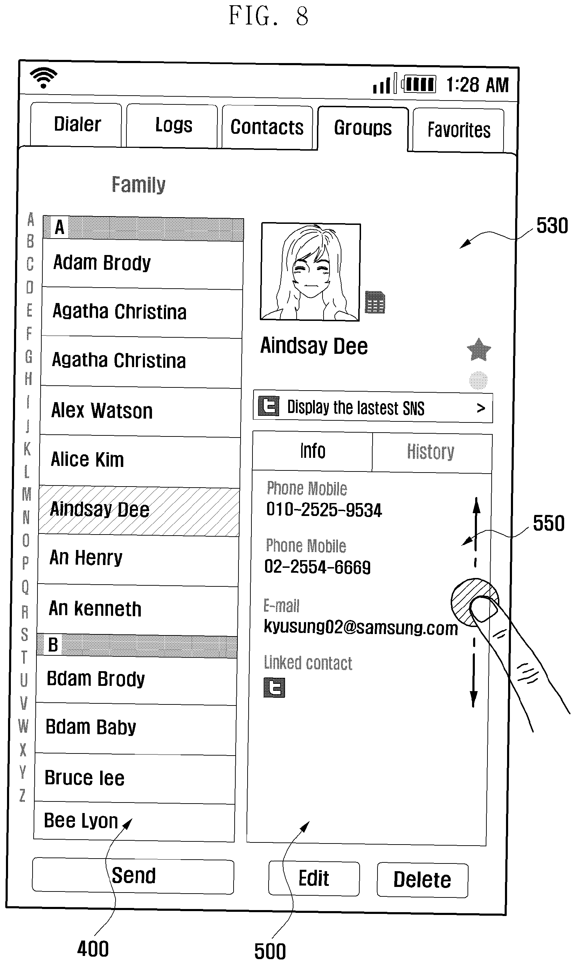

As shown in FIG. 8, the user may apply an interaction (e.g., sweep interaction) for controlling a scrolling operation within the second information display area 550 of the detail view area 500. When the detail view area 500 is divided into the first and second information display areas 530, 550, respectively, and the controller 140 senses a user's interaction for controlling a scrolling operation within the second information display area 550, the controller 140 scrolls additional information (or history information) shown on the second information display area 550 according to the user's applied interaction and displays a corresponding screen (e.g., the additional information (or history information) moves in an upward or downward direction within the second information display area 550).

During this illustrated process, the controller 140 does not perform scrolling operations with respect to a list shown on the list view area 400 or the representative information shown in the first information display area 530. That is, the controller 140 scrolls only the additional information (or history information) in the second information display area 550 according to the user's interaction applied to the second information display area 550. However, the controller 140 fixes and displays the list in the list view area 400 and the representative information in the first information display area 530.

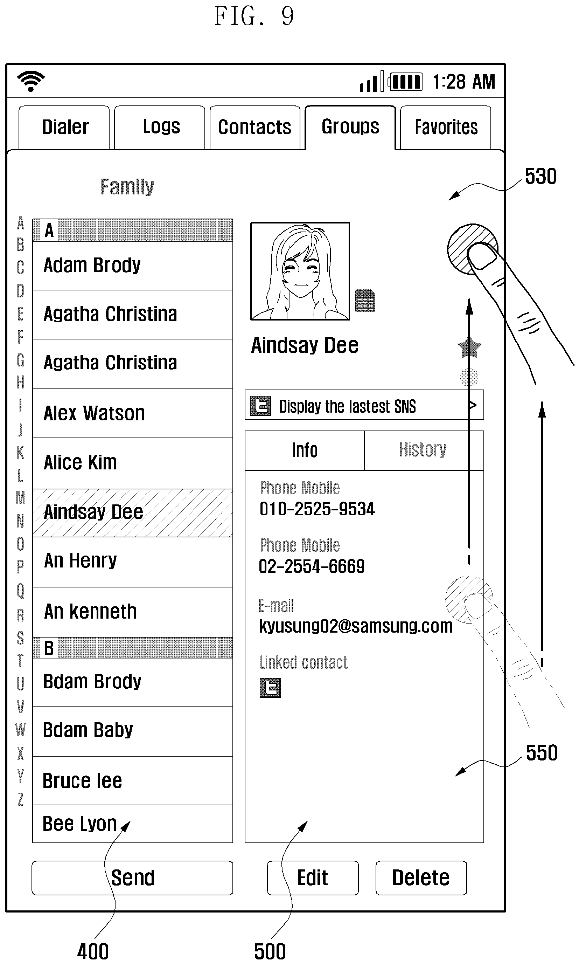

In a state where the scrolling operation is controlled as shown in FIG. 8, the user can move his/her interaction to the first information display area 530 as shown in FIG. 9 (hashed circle moving in an upward vertical direction). In that case, the controller 140 can process the scrolling operation that it has been processing with respect to the additional information (or history information) in the second information display area 550. That is, the controller 140 detects an area where a user's interaction for controlling a scrolling operation starts in the detail view area 500. When the controller 140 ascertains that an area where a user's interaction for controlling a scrolling operation starts is in the second information display area 550, in this case, it controls the scrolling operation with respect to the additional information (or history information) in the second information display area 550 according to the user's interaction. Although the user's interaction that started in the second information display area 550 moves to the first information display area 530 during the process of controlling the scrolling operation, the controller 140 can continue to receive input signals according to a user's interaction and still scroll the additional information (or history information) in the second information display area 550.

Although the user's interaction moves to the first information display area 530 as shown in FIG. 8, the controller 140 does not scroll the list shown in the list view area 400 or the representative information shown in the first information display area 530. That is, the controller 140 fixes and displays the list shown in the list view area 400 and the representative information shown in the first information display area 530.

As described above, when an interaction (e.g., sweep interaction) for controlling a scrolling operation occurs in the detail view area 500 as shown in FIGS. 6 to 9, the controller 140 detects an area where the interaction started. The controller 140 can ignore or process the interaction according to whether the interaction starts in first information display area 530 or the second information display area 550. While a command (e.g., to ignore an interaction or to control a scrolling operation) is executed in an area where the interaction starts, according to an input signal corresponding to an interaction, the area of the input signal, to be transferred, may be altered. For example, as shown in FIG. 7 or 9, the area where the interaction started may be continuously altered to another area. As such, although the interaction moves between different areas, the first execution of a command corresponding to the interaction (e.g., ignore an interaction or control a scrolling operation) can be retained. That is, a command that is first executed according to an interaction that started at a particular area can retain the corresponding operation until the interaction is released.

When the user's interaction that started within the first information display area 530 moves to the second information display area 550 as shown in FIG. 7, the controller 140 continues to ignore the interaction and thus does not perform a scrolling operation. However, when the user's interaction that starts within the second information display area 550 moves to the first information display area 530, as shown in FIG. 9, the controller 140 retains the scrolling operation according to the interaction.

As shown in FIGS. 6 to 9, the embodiments are described in such a manner that the first information display area 530 of the detail view area 500 is a fixed area where a scrolling operation is disabled and the second information display area 550 is a scroll area where a scrolling operation can be enabled.

However, it should be understood that the invention is not limited to the embodiments described. That is, the detail view area 500 may be modified in such a manner that a scrolling operation can be performed in either area. For example, the first information display area 530 may be set as an area where a scrolling operation can be performed and the second information display area 550 may be set as an area where a scrolling operation cannot be performed. For example, when the representative information from among detailed information (contact information) is provided to the second information display area 550 and the additional information is provided to the first information display area 530, the second information display area 550 may be set as a fixed area and the first information display area 530 may be set as a scroll area. In that case, the touch device performs scrolling operations according to user's interactions that are reverse to the operations shown in FIGS. 6 to 9. For example, when an interaction for controlling a scrolling operation is applied to the second information display area 550, the controller 140 ignores the interaction and does not perform a scrolling operation.

As described above, when the user applies an interaction for scrolling a contact list (e.g., a sweep interaction), the controller 140 can identify the area where the interaction starts. After that, the controller 140 determines whether to perform a scrolling operation according to an object (e.g., a list or contact information) provided to the area where the interaction started.

For example, when an interaction for controlling a scrolling operation is applied to a list view area 400 and thus the list view area 400 shows a list, the controller 140 controls a scrolling operation in the list view area 400 according to the interaction. When an interaction for controlling a scrolling operation is applied to a detail view area 500 and thus the detail view area 500 shows a list via one area, the controller 140 controls a scrolling operation in the detail view area 500 according to the interaction. When an interaction for controlling a scrolling operation is applied to a detail view area 500 and, thus, the detail view area 500 shows detailed information (e.g., contact information) via at least two separate view areas, the controller 140 ignores or controls a scrolling operation according to whether the interaction starts at a first information display area 530 or a second information display area 550 in the detail view area 500.

As described above, the controller 140 can identify one of at least two separate view areas in which the user's interaction starts or begins. When the controller 140 ascertains that the area where an interaction started is in a fixed area, and no scrolling is allowed or needed, it ignores the interaction. When an interaction starts in a fixed area and moves to a scroll area without releasing the touch, the controller 140 continues to ignore the interaction, regardless of the location of the interaction on the screen.

Although the embodiments have been described above, it should be understood that the invention is not limited to the specific embodiments described. Rather, according to the settings of one or more scroll control modes, the embodiments may be modified in such a manner that when an interaction for controlling a scrolling operation starts in a fixed area and moves to a scroll area without releasing the touch, the controller 140 ignores the interaction in the fixed area but allows the interaction to perform a scrolling operation when the interaction enters the scroll area or scrollable area.

As described above, when one of at least two separate view areas is a scroll area where an interaction started, a scrolling operation can be performed according to the interaction. When an interaction starts in a scroll area and moves to a fixed area without releasing the touch, the controller 140 can still perform the scrolling operation in the fixed area.

Although the embodiments have been described above, it should be understood that the invention is not limited to the embodiments described. Rather, according to one or more settings of scroll control modes, the embodiments may be modified in such a manner that when an interaction starts in the scroll area and then moves to the fixed area without releasing the touch, the controller 140 controls the scrolling operation in the scroll area but ignores the interaction when the interaction enters the fixed area.

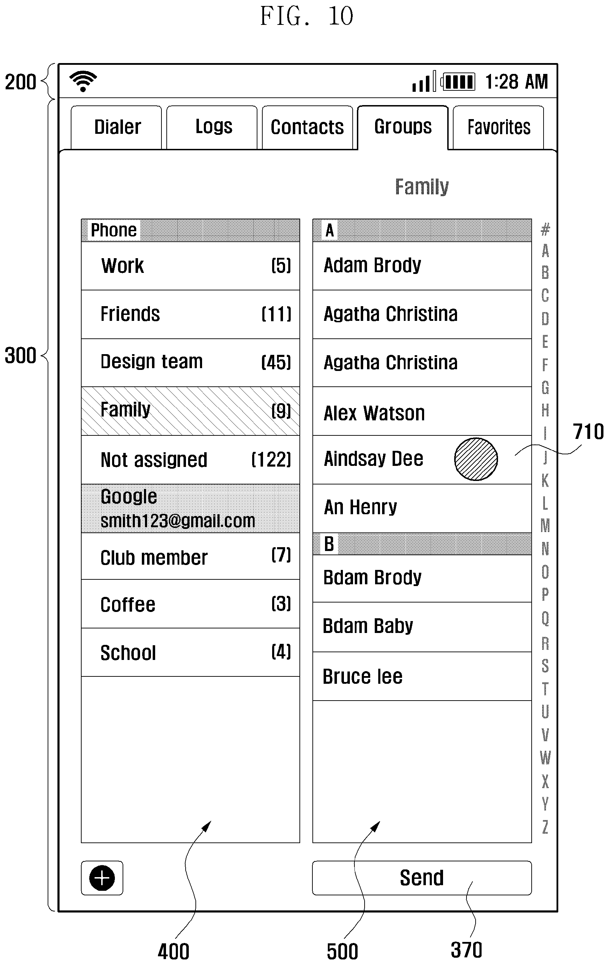

FIGS. 10 to 12 illustrate screens that show an embodiment of an operation for managing a contact list, according to the invention.

As shown in FIG. 10, the display unit 120 is divided into an indicator area 200 and an execution screen area 300, and the execution screen area 300 shows a contact list screen. The contact list is displayed in such a manner that an upper level list (first list) and a lower level list (second list) with respect to an activated contact (e.g., family), which is highlighted in the upper level list (as indicted by the hashed markings), are displayed via the list view area 400 and the detail view area 500, respectively.

In the screen as shown in FIG. 10, the user selects a particular contact 710 from the second list in the detail view area 500 by his/her touch-based interaction (e.g., a tap interaction, as indicated by the hashed circle). For example, the user applies a tap interaction to an area where the particular contact 710 is located in the detail view area 500 in order to check a still lower level of the particular contact 710.

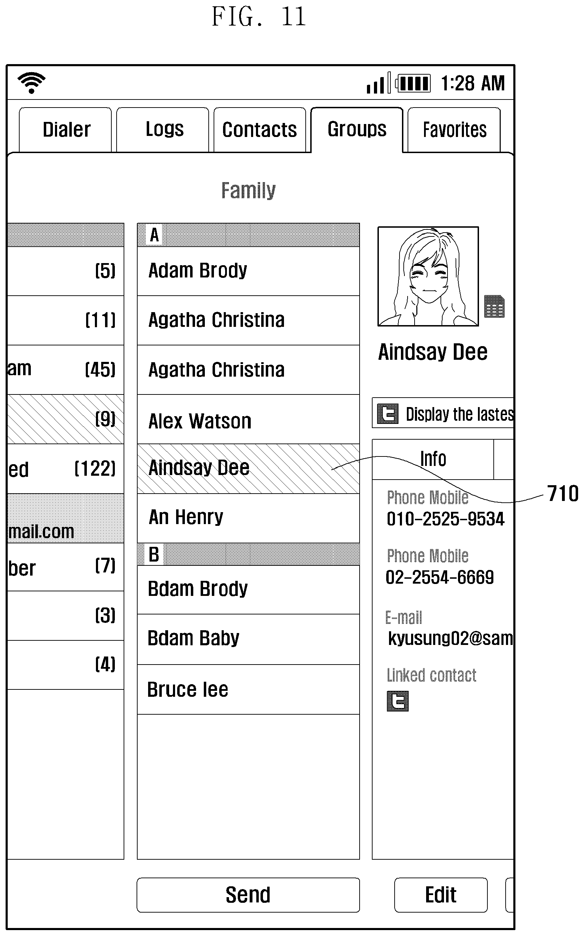

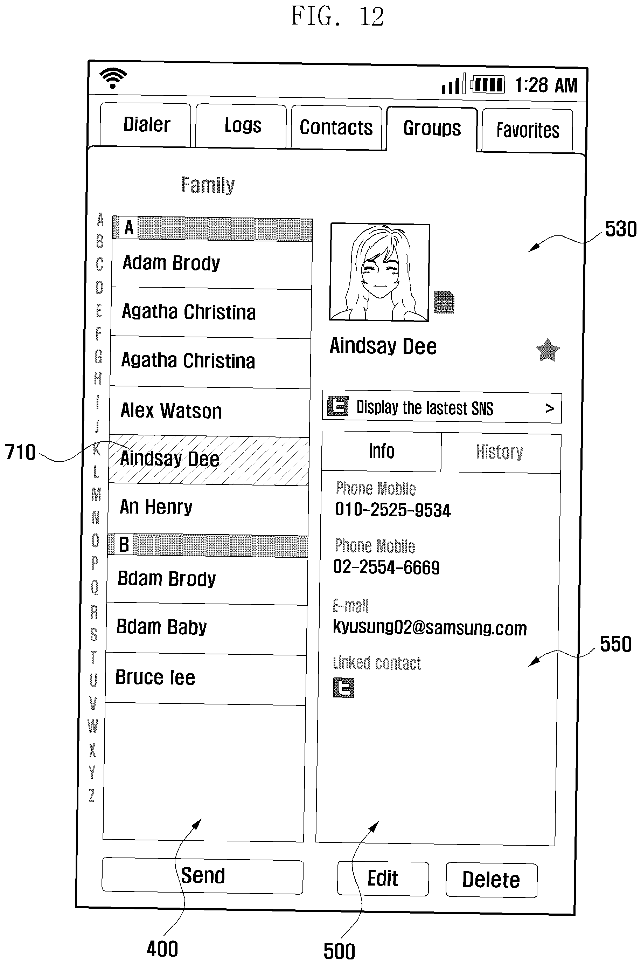

In that case, the controller 140 outputs a transition effect to alter the screen shown in FIG. 10 to the screen displaying a contact list shown in FIGs. 11 and 12. For example, the controller 140 may provide an effect to slide the contact list to the left. In that case, the first list in the list view area 400 gradually slides and disappears from the display unit 120, on the left side, and instead the second list in the detail view area 500 moves to and appears on the screen on the right side.

While the detailed information or the list with respect to a lower level of the particular contact 710 selected in the second list gradually disappears from the display unit 120, the detail view area 500 slides and appears on the screen. As shown in FIGs. 10 to 12, when the lower level of the selected contact 710 is the lowest level, the screen of the detail view area 500 may display detailed information regarding the selected contact 710. Therefore, the detailed information shown in the detail view area 500 may be displayed in such a manner that the representative information and the additional information is displayed via the first information display area 530 and second information display area 550.

As such, when the second list of the detail view area 500 moves to the list view area 400, it is altered from a lower level to a higher level, and a list (or the third list) or detailed information newly presented in the detail view area 500 becomes the lower level of the particular contact in the second list.

Although it is not shown in FIGs. 10 to 12, the user may also apply an interaction to select a particular contact in the first list of the list view area 400 in a state where the screen shown in FIG. 10 or 12 is displayed. In that case, the first list is displayed in the list view area 400 and the particular contact is selected and highlighted according to the user's applied interaction. The detail view area 500 shows a new list (the third list) corresponding to a lower level of the particular contact. Alternatively, the detail view area 500 may show detailed information regarding the particular contact if the lower level of the particular contact is the lowest level.

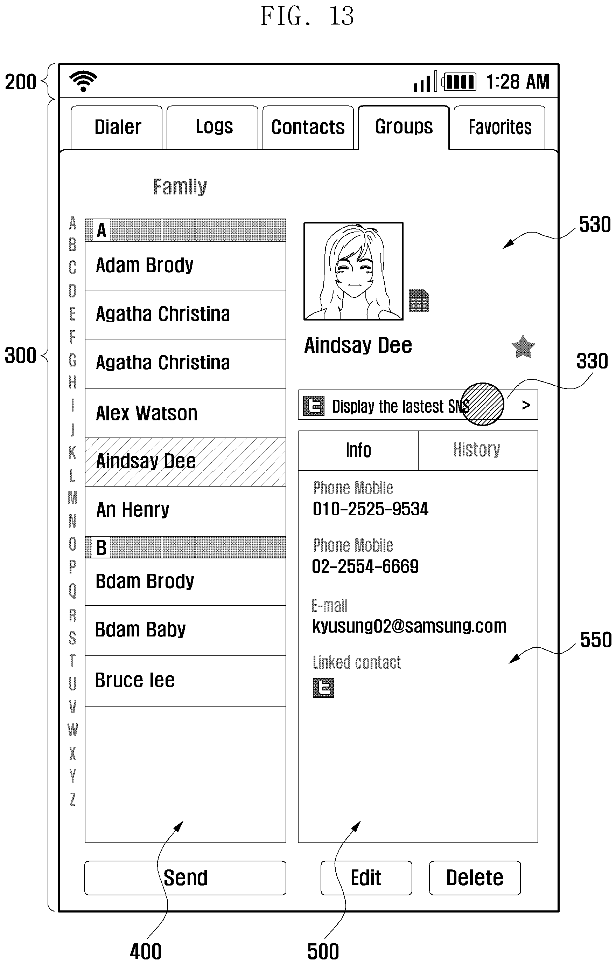

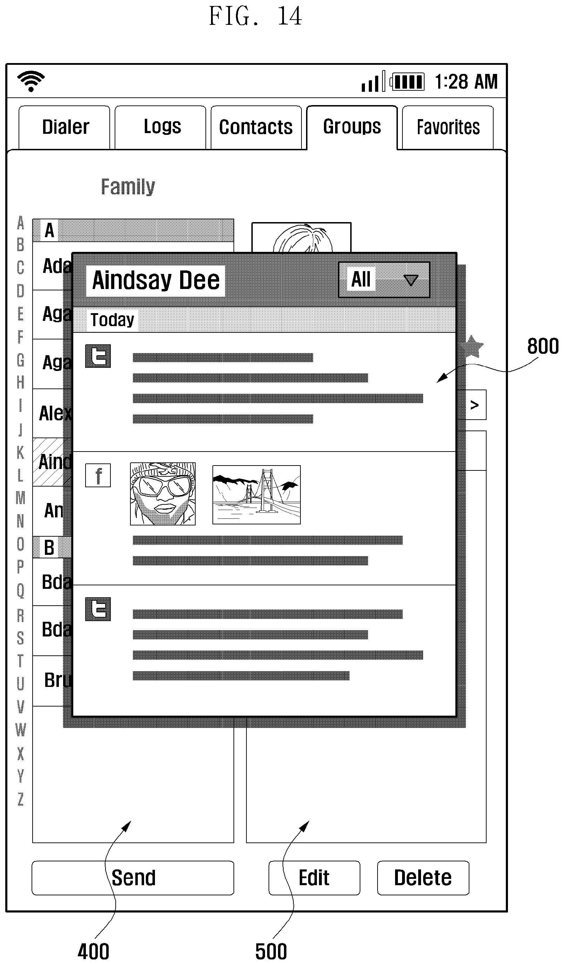

FIGs. 13 and 14 illustrate screens that show another embodiment of an operation for managing a contact list, according to the invention.

As shown in FIG. 13, the display unit 120 is divided into an indicator area 200 and an execution screen area 300, and the execution screen area 300 shows a contact list screen. The contact list is displayed as an upper level list and a lower level list with respect to an activated contact (e.g., Aindsay Dee, as indicated by the hash markings). The upper level list is presented in the list view area 400 and lower level list is presented in the detail view area 500.

Since the embodiment shown in FIGs. 13 and 14 assumes that a lower level of a particular contact is the lowest level, the detail view area 500 displays the screen in such a manner that the detailed information regarding the selected contact (e.g., Aindsay Dee) is shown as representative information and additional information in the first information display area 530 and the second information display area 550, respectively. In addition, as shown in FIG. 13, the detail view area 500 also shows a variety of function items (e.g., an SNS function item 330, etc.). FIGs. 13 and 14 show screens that describe operations according to a user's interactions applied to the SNS function item 330 (as indicated by the hashed circle) in the detail view area 500.

The user selects the SNS function item 330 in the detail view area 500 by inputting a touch-based interaction (e.g., a tap interaction) in a state where the screen shown in FIG. 13 is displayed. For example, the user can apply a tap interaction to the SNS function item 330 in order to check messages that are transmitted to, or received from, the selected contact when using SNS.

In that case, the controller 140 outputs a pop-up window according to an SNS function as shown in FIG. 14. For example, when the controller 140 receives an SNS function request via the SNS function item 330 according to a user's interaction, it can track messages that are transmitted to and/or received from, the selected contact (e.g., Aindsay Dee) via SNS. The controller 140 can display contents of the tracked messages in a particular arrangement (e.g., in the time and date order) via a pop-up window 800.

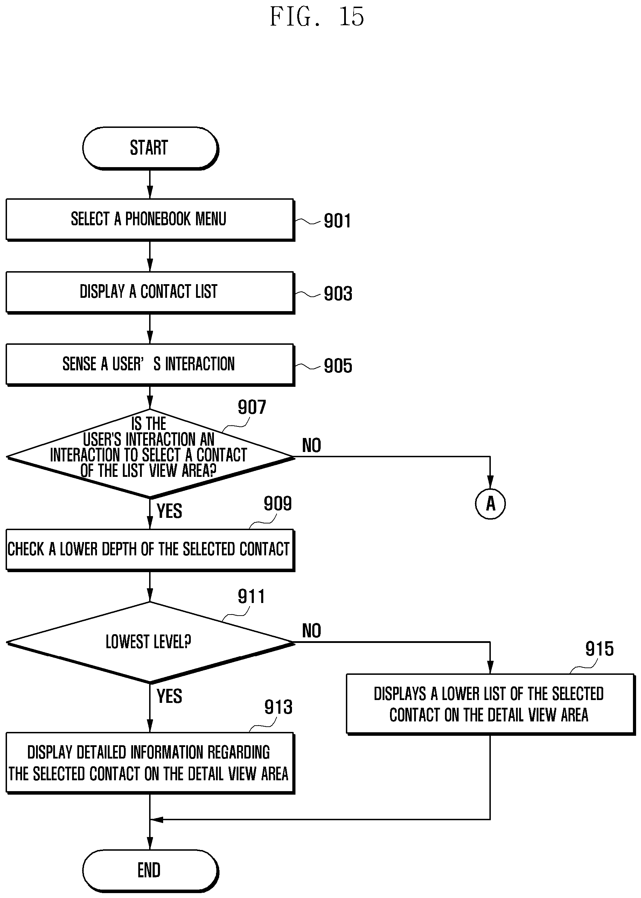

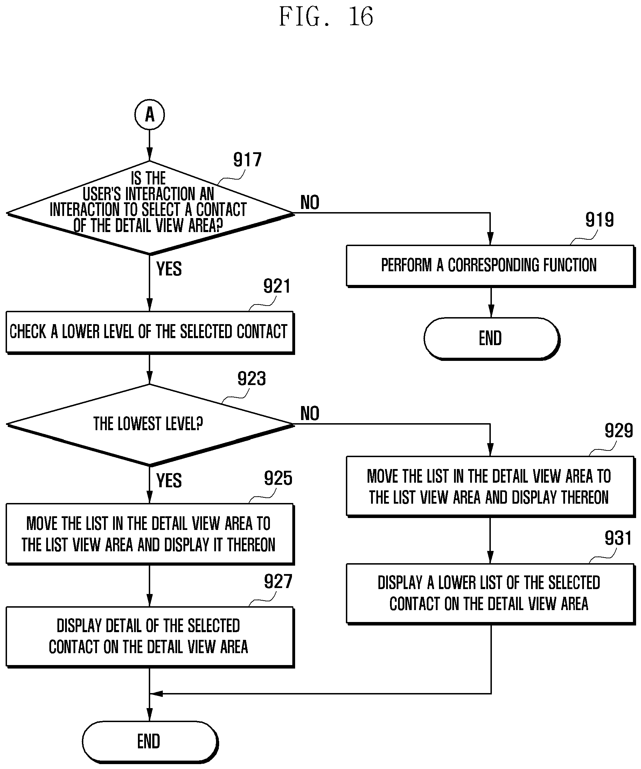

FIGs. 15 and 16 illustrate a flowchart that describes a method for providing a contact list in a touch device, according to an embodiment of the invention.

Referring to FIGs. 15 and 16, the controller 140 detects an input to select a phonebook menu (901). For example, when the user applies a touch-based input to the display unit 120 and selects a phonebook menu from a number of menus displayed thereon, the display unit 120 creates an input signal and transfers the input signal to the controller 140. The controller 140 receives the input signal and thus detects that the user selects the phonebook menu.

After detecting the user's selection at step 901, the controller 140 extracts contacts from the storage unit 130 and displays a list of contacts on the screen (903). The controller 140 displays the contact list in such a manner that an upper level list (first list) and a lower level list (second list) are show via the list view area 400 and the detail view area 500, respectively. The second list includes lower levels of contact information associated with a particular contact, selected and activated in the first list of the list view area 400. When a lower level of the particular contact (item) is the lowest level, the detail view area 500 displays detailed information of the particular content (item) in the first information display area 530 and the second information display area 550.

The controller 140 senses a user's interaction while the contact list screen is being displayed (905). When the controller 140 senses the user's interaction, the controller determines whether the user's interaction is an interaction (e.g., a tap interaction) to select a particular contact of the list view area 400 (907). For example, when the user applies a touch-based input to the contact list screen displayed on the display unit 120, the display unit 120 creates the input signal and transfers the input signal to the controller 140. The controller 140 receives the input signal and checks an area from which the input signal is created, thereby detecting the area where the user's interaction occurred. The controller 140 can also identify an item or contact selected according to the location where the input signal was created.

When the controller 140 ascertains that the user's interaction is an interaction to select a particular contact of the list view area 400 at 907, it checks whether a lower level of the contact has been selected according to the user's interaction (909), and then determines whether the lower level of the selected contact is the lowest level (911). For example, the controller 140 determines whether the lower level of the selected contact is the lowest level with a particular result value, not a list form.

When the controller 140 ascertains that the lower level of the selected contact is the lowest level at step 911, the controller causes the display of detailed information regarding the selected contact on the detail view area 500 (913) (e.g., FIGs. 10-12). For example, when the controller 140 ascertains that the lower level of the selected contact is the lowest level with a particular result value of the selected contact, detailed information is displayed via two separate areas, i.e., first information display area 530 and second information display area 550, in the detail view area 500.

However, when the controller 140 ascertains that the lower level of the selected contact is not the lowest level at step 911, a lower list of a still lower level of the selected contact is displayed in the detail view area 500 (915). For example, when the lower level of the selected contact is a lower list of lower contacts depending on the selected contact, the controller 140 displays a corresponding lower list in the detail view area 500 without dividing the area.

Meanwhile, when the controller 140 ascertains that the user's interaction is not an interaction for selecting a particular contact of the list view area 400 at 907, the controller 140 determines whether the user's interaction is an interaction (e.g., a tap interaction) to select a particular contact of the detail view area 500 (917). For example, when the user applies a touch-based input to the contact list screen displayed on the display unit 120, the display unit 120 creates the input signal and transfers the input signal to the controller 140. The controller 140 receives the input signal and checks an area from which the input signal is created, thereby detecting the area where the user's interaction occurred. The controller 140 can also identify an item or contact selected according to the input signal.

When the controller 140 ascertains that the user's interaction is not an interaction for selecting a particular contact of the detail view area 500 at step 917, the controller 140 performs a function corresponding to the user's interaction (919). For example, when the user's interaction is an interaction for selecting a particular function item, the controller 140 executes the function and controls the alteration of the screens according to the function execution. When the controller 140 ascertains that one of the menu tabs 310 (see FIG. 2) is selected, a screen corresponding to the menu tab is displayed.

However, when the controller 140 ascertains that the user's interaction is an interaction for selecting a particular contact of the detail view area 500 at step 917, it checks whether a lower level of the contact has been selected according to the user's interaction (921), and then determines whether the lower level of the selected contact is the lowest level (923). For example, the controller 140 determines whether the lower level of the selected contact is the lowest level with a particular result value, not a list form.

When the controller 140 ascertains that the lower level of the selected contact is the lowest level at step 923, the controller moves the list (second list) shown in the detail view area 500 to the list view area 400 and displays the second list in the list view area (as an upper level) (925). After that, the controller 140 displays detailed information of the selected contact on the detail view area 500 (927). In the detail view area 500, the second list becomes a lower list of a contact, selected and highlighted in the list (first list) of the list view area 400. When the second list is moved to the list view area 400, it becomes an upper list. In that case, detailed information regarding a particular contact of the second list that is selected according to a user's interaction is displayed on the detail view area 500. Detail view area 500 is divided into a first and second information display areas, 530, 550, respectively, as previously discussed and when a lower level of a contact selected in the detail view area 500 is the lowest level with a particular result value regarding the selected contact, the controller 140 moves a list (second list) including the selected contact to the list view area 400 and displays it thereon. The controller 140 also displays detailed information regarding the selected contact via the divided areas in the detail view area 500.

However, when the controller 140 ascertains that the lower level of the selected contact is not the lowest level at step 923, it moves the list (second list) shown in the detail view area 500 to the list view area 400 and displays the list in the list area 400 (929). After that, the controller 140 displays a lower list (third list) of a still lower level of the selected contact into the detail view area 500 (931).

In the detail view area 500, the second list becomes a lower list of a particular contact, selected and highlighted in the list (first list) of the list view area 400. When the second list is moved to the list view area 400, it becomes an upper list. By doing so, a lower list (third list) associated with a still lower level of a particular contact is selected according to a user's interaction in the second list and may be shown in the detail view area 500. That is, when a lower level of a contact selected in the detail view area 500 is a lower list (third list) linked to a lower item of the selected contact, the controller 140 moves the list (second list) including the selected contact to the list view area 400 and displays the list (second list) as an upper list. The controller 140 also displays a third list of the selected contact, as a lower list, on in detail view area 500 (see FIGs. 10-12).

Although the embodiment is implemented in such a manner that moving the list of the detail view area to the list view area and displaying it thereon, at steps 925 and 929, are performed after steps 921 and 923, it should be understood that the invention is not limited to the embodiment. That is, steps 925 and 929 may be performed earlier than steps 921 and 923. For example, when the controller 140 detects that the user's interaction is to select a particular contact in the detail view area 500, the controller moves the list of the detail view area 500 to the list view area 400 and then displays detailed information of a still lower list of the particular contact in the detail view area, according to a lower level of the selected contact.

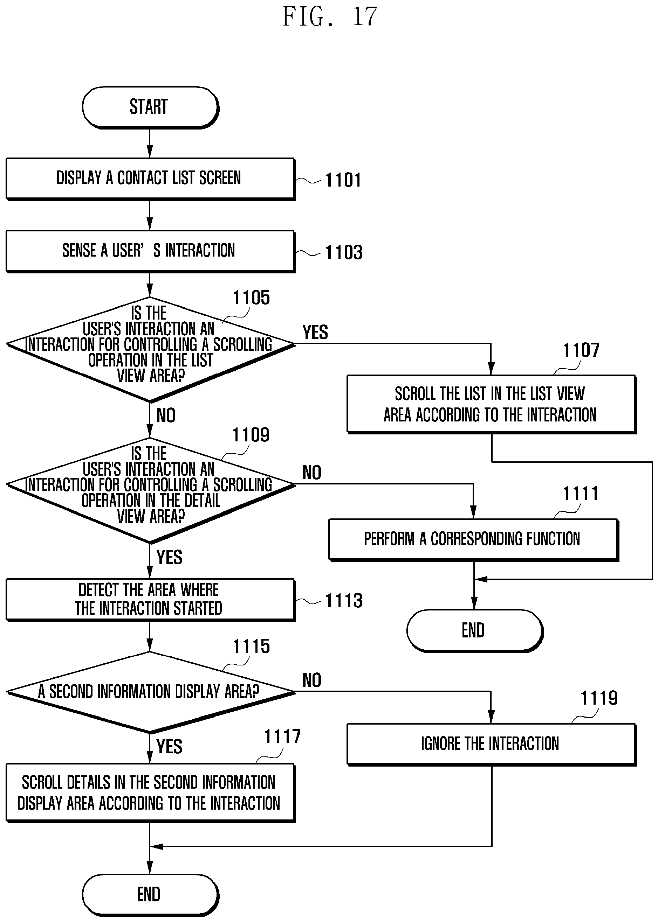

FIG. 17 illustrates a flowchart that describes a method for scrolling a contact list in a touch device according to a user's interaction, according to an embodiment of the invention. In this illustrative example, the list view area 400 shows a list of contacts including a particular contact and the detail view area 500 displays the detail of the particular contact on a contact list screen. The contact list screen is divided into the first information display area 530 and second information display area 550, as previously described.

Referring to FIG. 17, the controller 140 displays a contact list screen according to a user's request (1101).

The controller 140 senses a user's interaction in a state where the contact list screen is being displayed (1103). When the controller 140 senses the user's interaction, the controller 140 determines whether the user's interaction is an interaction (e.g., a sweep interaction) for controlling a scrolling operation in the list view area 400 (1105). For example, when the user applies a touch-based interaction to the contact list screen on the display unit 120, the display unit 120 creates a corresponding input signal and transfers the input signal to the controller 140. The controller 140 receives the input signal and checks an area from which the input signal is created, thereby detecting the area where the user's interaction occurred. The controller 140 can also identify the input signal and determine whether the input signal corresponds to an interaction to select an item or contact, e.g., a tap interaction, or to scroll a list, e.g., a sweep interaction.

When the controller 140 ascertains that the user's interaction is an interaction (e.g., a sweep interaction) for scrolling the list in the list view area 400 at step 1105, it scrolls the list according to the user's applied interaction (1107). The controller 140 controls the displays of the screen where contacts are vertically moved in the list view area 400 according to the user's applied interaction. However, the controller fixes and displays the detail of the particular contact on the detail view area 500.

However, when the controller 140 ascertains that the user's interaction is not an interaction for scrolling the list in the list view area 400 at step 1105, the controller determines whether the user's interaction is an interaction (e.g., a sweep interaction) for controlling a scrolling operation in the detail view area 500 (1109). For example, when the user applies a touch-based interaction to the contact list screen displayed on the display unit 120, the display unit 120 creates the input signal and transfers the input signal to the controller 140. The controller 140 receives the input signal and checks an area from which the input signal is created, thereby detecting the area where the user's interaction occurred. The controller 140 can also identify the input signal and determines whether it corresponds to an interaction to select an item or contact, e.g., a tap interaction, or to control a scrolling operation, e.g., a sweep interaction.

When the controller 140 ascertains that the user's interaction is not an interaction (e.g., a sweep interaction) for scrolling details in the detail view area 500 at step 1109, the controller 140 performs a corresponding function according to the user's interaction (1111). For example, when the user's interaction is an interaction for selecting a particular contact, the controller 140 controls the display of the contact list screen via the list view area 400 and the detail view area 500, according to the area where the user's interaction occurred. When the user's interaction is an interaction for selecting an item corresponding to a particular function, the controller 140 executes the function and controls the screen display according to the execution of the function. For example, when an item 330 (FIG. 3) corresponding to an SNS function is selected, the controller 140 controls the display of information regarding message transmission/reception via a pop-up message window 800.

However, when the controller 140 ascertains that the user's interaction is an interaction (e.g., a sweep interaction) for scrolling details in the detail view area 500 at step 1109, it detects the area where the interaction (e.g., a sweep interaction) started (1113), and then determines whether the interaction started in the second information display area 550 (1115). For example, when the user applies a touch-based interaction to the detail view area 500, the display unit 120 creates the input signal and transfers it to the controller 140. The controller 140 receives the input signal and identifies whether the input signal is created within the detail view area 500. The controller 140 can also identify the input signal and determine whether it corresponds to an interaction that occurs in the first information display area 530 or the second information display area 550 of the detail view area 500.

When the controller 140 ascertains that the interaction starts in the second information display area 550 at step 1115, details (i.e., additional information) in the second information display area 550 are scrolled according to the user's interaction (1117). The controller 140 controls the display of the screen where the additional information is vertically moved in the detail view area 500 according to the user's interaction. However, the controller 140 fixes and displays a list in the list view area 400 and the detail (i.e., representative information) in the first information display area 530 of the detail view area 500. When the user's interaction starts in the second information display area 550 and moves to the first information display area 530, the controller 140 continues the scrolling operation according to the user's interaction.

However, when the controller 140 ascertains that the interaction does not start in the second information display area 550 at step 1115, i.e., that the interaction starts in the first information display area 530 at step 1115, the controller ignores the interaction (1119). For example, although a sweep interaction for controlling a scrolling operation is applied to the first information display area 530, the controller 140 ignores the sweep interaction and instead fixes and displays the contact list screen. In addition, although a user's interaction starts in the first information display area 530 and then moves to the second information display area 550 without releasing the touch, the controller 140, in this exemplary example, ignores the user's interaction.

When an interaction (e.g., a sweep interaction) for controlling a scrolling operation occurs in the detail view area 500, the controller 140 can detect the area where the interaction occurred. The controller 140 can ignore the interaction or perform the scrolling operation according to the area where the interaction starts (e.g., first information display area 530 or second information display area 550), as previously described (i.e., based on one or more mode settings).

While a command according to the input of an interaction is being executed (i.e., ignoring the interaction or performing a scrolling operation according to the interaction) in the area where the interaction started, when the interaction moves from the area where the interaction started to another area, the controller may continue the execution of the command corresponding to the first interaction (e.g., ignoring the interaction or performing a scrolling operation according to the interaction). That is, the controller 140 keeps executing the original response to the interactive based on where the interaction started. Thus, in one aspect of the invention, the original function performed in response to the initial touch (i.e., ignore or perform a scrolling operation) continues until the interaction is released. In another aspect of the invention, the response to the touch may be modified as the touch moves from one area to another as previously described.

As described above, the contact list-providing system and method according to the invention can allow the touch device to effectively display and manage a contact list on a screen. The system and method can be applied to all types of devices with touch-based input interfaces.

The contact list-providing system and method according to the invention can enable a touch device to divide a contact list in the phonebook menu into at least two view areas and to simultaneously display screens including upper and lower levels of contact information via the two areas. The contact list-providing system and method can more effectively switch between upper and lower levels in a contact list, according to a user's interaction by using at least two view areas. The contact list-providing system and method can allow a touch device to implement an environment where a contact list can be intuitively displayed and effectively managed, thereby enhancing the convenience of use by the user.

As described above, the system and method for providing a contact list in the touch device according to the invention can be implemented with program commands that can be conducted via various types of computers and recorded in computer-readable recording media. The computer-readable recording media contain program commands, data files, data structures, or the like, or a combination thereof. The program commands recorded in the recording media may be designed or configured to comply with the invention or may be software well-known to the ordinary person skilled in the art.

The computer-readable recoding media includes hardware systems for storing and conducting program commands. Examples of the hardware systems are magnetic media such as a hard disk, floppy disk, a magnetic tape, optical media such as CD-ROM and DVD, Magneto-Optical Media, such as floptical disk, ROM, RAM, flash memory, etc. The program commands include assembly language or machine code complied by a complier and a higher level language interpreted by an interpreter. The hardware systems may be implemented with at least one software module to comply with the invention. Accordingly, when the program commands stored on the computer readable media are accessed by the controller, which may be represented as a computer, a processor or a dedicated hardware configuration, then the controller (i.e., computer, processor or dedicated hardware configuration) is transformed into a special processor that is able to implement the processes shown herein.

Although exemplary embodiments of the invention have been described in detail hereinabove, it should be understood that many variations and modifications of the basic inventive concept herein described, which may be apparent to those skilled in the art, will still fall within the scope of the invention as defined in the appended claims. For example, although the invention is illustrated using a user's finger, it would be recognized that other forms of contact means may be used. For example, a stylus may be used to contact the screen to create an interaction and perform a movement motion or sweeping again. In addition, it would be recognized that the interaction may be detected with a proximity detector that detects the near presence of a finger or stylus. In addition, the interaction may be input by a vocal command. For example, the device may include a microphone that accepts vocal commands that are received by the controller and interpreted into digital signals that may be used to perform the invention as described herein.

Furtherstill, although not shown it would be recognized that the while the switching operation has been shown wherein an interaction with a list causes the display of a still lower level of information, a horizontal sweeping interaction may be used to switch between one level and another. This is particular of use when a lowest level is displayed in the detailed area 550 and a return to an upper level is desired.

## Claims

1. A contact list providing method, operable in a controller (140), the method comprising the steps of:
displaying (903), when a phonebook menu is selected (903), a contact list on a screen (120); and
providing an upper level and a lower level of the contact list via at least two separate view areas (400, 500) during the display of the contact list screen,
wherein the step of providing an upper level of the contact list comprises displaying an upper level list comprising a plurality of contacts in the same level in a first view area (400), and
wherein the step of providing a lower level of the contact list comprises the steps of:
checking (909), when a contact in the upper level of the contact list is selected (907) according to a user's interaction (905), a lower level of the contact;
displaying (913), when the checked lower level is the lowest level, contact information in a second view area (500); and
displaying (915), when the checked lower level is not the lowest level, a still lower level list comprising a plurality of contacts in the same level in the second view area (500).

2. The method of claim 1, wherein the view areas (400, 500) comprise:
a list view area (400) showing a list corresponding to the upper level; and
a detail view area (500) showing contact information or a lower list corresponding to the lower level,
wherein the detail view area (500) displays representative information of the contact information on a first information display area (530) and additional information of the contact information on a second information display area (550).

3. The method of claim 2, further comprising the step of:
switching (925, 929) between the upper level and the lower level, according to an interaction (905) applied to one of the list view area (400) and the detail view area (500),
wherein the step of switching (925, 929) comprises the step of:
displaying (927, 931), when the interaction (905) is to select (917) a particular contact in the list view area (400), contact information or a lower list of the particular contact within the detail view area (500).

4. The method of claim 3, wherein the step of displaying (927, 931) contact information or a lower list comprises the steps of:
displaying (927), when a lower level of the particular contact is the lowest level, the contact information associated with the particular contact in the detail view area (500); and
displaying (931), when a lower level of the particular contact is not the lowest level, the lower list in the detail view area (500).

5. The method of claim 3, wherein the step of switching (925, 929) between the upper level and the lower level comprises the steps of:
moving (925, 929), when the interaction is to select a particular contact in the detail view area (500), the list of the detail view area (500) to the list view area (400) and displaying the moved list as the upper level; and
displaying in the detail view area (500) one of: contact information and a still lower list associated with the particular contact.

6. The method of claim 2, further comprising the step of:
controlling (1107) a scrolling operation in the list view area (400) or the detail view area (500) according to an interaction (1103) applied to the list view area (400) or the detail view area (500).

7. The method of claim 6, wherein the step of controlling (1107) a scrolling operation comprises the step of:
performing (1107), when the interaction (1103) is to control a scrolling operation in the list view area (400), the scrolling operation in the list view area (400) according to the interaction (1103), while maintaining the display in the detail view area (500) fixed.

8. The method of claim 6, wherein the step of controlling (1117) a scrolling operation comprises the step of:
detecting (1113), when the interaction (1103) is to control a scrolling operation in the detail view area (500), an area where the interaction (1103) starts.

9. The method of claim 8, wherein the step of controlling (1117) a scrolling operation comprises the step of:
ignoring (1119) the interaction when the interaction starts in a first information display area (530).

10. The method of claim 8, wherein the step of controlling (1117) a scrolling operation comprises the steps of:
performing (1117) a scrolling operation in the second information display area (550) according to the interaction (1103) when the interaction (1103) starts in the second information display area (550); and
retaining the information in the first information display area (530) and the list view area (400) fixed.

11. The method of claim 8, wherein the step of controlling (1117) a scrolling operation comprises the step of:
continuing the execution of a command that was first executed according to an interaction (1103) that starts in one of the first information display area (530) and the second information display area (550) and moves to the other of the first information display area (530) and the second information display area (550).

12. The method of claim 11, wherein the step of continuing the execution of a command comprises the steps of:
continuing the scrolling operation that has been started in the second information display area (550) when an interaction (1103) starts in the second information display area (550) and moves to the first information display area (530); and
ignoring the interaction (1103), when the interaction (1103) starts in the first information display area (530) and moves to the second information display area (550).

13. A touch device comprising:
a display unit (120) for displaying an upper level and a lower level of a contact list via at least two separate view areas (400, 500); and
a controller (140) for controlling the display of the contact list on the display unit (120),
wherein the controller (140) is adapted to control the display unit (120) to display an upper level list comprising a plurality of contacts in the same level in a first view area (400), and
wherein the controller (140) is further adapted to check, when a contact in the upper level of the contact list is selected according to a user's interaction, a lower level of the contact, and to control the display unit (120) to display, when the checked lower level is the lowest level, detailed information regarding the contact in a second view area (500), and to display, when the checked lower level is not the lowest level, a still lower level list comprising a plurality of contacts in the same level in the second view area (500).

14. The touch device of claim 13, wherein the controller (140) is adapted to switch between the upper level and the lower level, according to an interaction applied to one of the view areas (400, 500), and for scrolling operation in the view area.

15. The touch device of claim 13, wherein the view areas (400, 500) comprise:
a list view area (400) adapted to show a list corresponding to the upper level; and
a detail view area (500) adapted to show contact information or a lower list corresponding to the lower level,
wherein the detail view area (500) comprises:
a first information display area (530) adapted for showing representative information of the contact information; and
a second information display area (550) adapted for showing additional information of the contact information.

16. The touch device of claim 15, wherein the controller is adapted to (140):
ignore an interaction that starts in the first information display area (530); and
execute a scrolling operation according to an interaction that starts in the second information display area (550).

## Patentansprüche

1. Kontaktlisten-Bereitstellungsverfahren, das in einer Steuereinheit (140) betrieben werden kann, wobei das Verfahren die folgenden Schritte umfasst:
Anzeigen (903), wenn ein Telefonbuchmenü ausgewählt (903) wird, einer Kontaktliste an einem Bildschirm (120); und
Bereitstellen einer höheren Ebene und einer unteren Ebene der Kontaktliste über mindestens zwei separate Ansichtbereiche (400, 500) während der Anzeige des Kontaktlistenbildschirms,
wobei der Schritt eines Bereitstellens einer höheren Ebene der Kontaktliste ein Anzeigen einer Liste einer höheren Ebene umfasst, die eine Vielzahl von Kontakten auf derselben Ebene in einem ersten Ansichtbereich (400) umfasst, und
wobei der Schritt eines Bereitstellens einer unteren Ebene der Kontaktliste die folgenden Schritte umfasst:
Überprüfen (909), wenn ein Kontakt in der höheren Ebene der Kontaktliste gemäß einer Interaktion (905) eines Benutzers ausgewählt (907) wird, einer unteren Ebene des Kontakts;
Anzeigen (913), wenn die überprüfte untere Ebene die unterste Ebene ist, von Kontaktinformationen in einem zweiten Ansichtbereich (500); und
Anzeigen (915), wenn die überprüfte untere Ebene nicht die unterste Ebene ist, einer Liste auf einer noch weiter unteren Ebene umfassend eine Vielzahl von Kontakten auf derselben Ebene in dem zweiten Ansichtbereich (500).

2. Verfahren nach Anspruch 1, wobei die Ansichtbereiche (400, 500) Folgendes umfassen:
einen Listenansichtbereich (400), der eine Liste entsprechend der höheren Ebene zeigt; und
einen Detailansichtbereich (500), der Kontaktinformationen oder eine untere Liste entsprechend der unteren Ebene zeigt,
wobei der Detailansichtbereich (500) repräsentative Informationen der Kontaktinformationen auf einem ersten Informationsanzeigebereich (530) und zusätzliche Informationen der Kontaktinformationen auf einem zweiten Informationsanzeigebereich (550) anzeigt.

3. Verfahren nach Anspruch 2, ferner umfassend den folgenden Schritt:
Umschalten (925, 929) zwischen der höheren Ebene und der unteren Ebene,
gemäß einer Interaktion (905), die auf einen von dem Listenansichtbereich (400) und dem Detailansichtbereich (500) angewendet wird,
wobei der Schritt eines Umschaltens (925, 929) den folgenden Schritt umfasst:
Anzeigen (927, 931), wenn die Interaktion (905) ist, einen jeweiligen Kontakt in dem Listenansichtbereich (400) auszuwählen (917), von Kontaktinformationen oder einer unteren Liste des jeweiligen Kontakts in dem Detailansichtbereich (500).

4. Verfahren nach Anspruch 3, wobei der Schritt eines Anzeigens (927, 931) von Kontaktinformationen oder einer unteren Liste den folgenden Schritt umfasst:
Anzeigen (927), wenn eine untere Ebene des jeweiligen Kontakts die unterste Ebene ist, der Kontaktinformationen in Verbindung mit dem jeweiligen Kontakt in dem Detailansichtbereich (500); und
Anzeigen (931), wenn eine untere Ebene des jeweiligen Kontakts nicht die unterste Ebene ist, der untersten Liste in dem Detailansichtbereich (500).

5. Verfahren nach Anspruch 3, wobei der Schritt eines Umschaltens (925, 929) zwischen der höheren Ebene und der unteren Ebene die folgenden Schritte umfasst:
Bewegen (925, 929), wenn die Interaktion ist, einen jeweiligen Kontakt in dem Detailansichtbereich (500) auszuwählen, der Liste des Detailansichtbereichs (500) zu dem Listenansichtbereich (400) und Anzeigen der bewegten Liste als die höhere Ebene; und
Anzeigen in dem Detailansichtbereich (500) eines der folgenden: Kontaktinformationen und einer noch weiter unteren Liste, die mit dem jeweiligen Kontakt verbunden ist.

6. Verfahren nach Anspruch 2, ferner umfassend den folgenden Schritt:
Steuern (1107) einer Scrolling-Betätigung in dem Listenansichtbereich (400) oder dem Detailansichtbereich (500) gemäß einer Interaktion (1103), die auf den Listenansichtbereich (400) oder den Detailansichtbereich (500) angewendet wird.

7. Verfahren nach Anspruch 6, wobei der Schritt eines Steuerns (1107) einer Scrolling-Betätigung den folgenden Schritt umfasst:
Ausführen (1107), wenn die Interaktion (1103) ist, eine Scrolling-Betätigung in dem Listenansichtbereich (400) zu steuern, der Scrolling-Betätigung in dem Listenansichtbereich (400) gemäß der Interaktion (1103), während die Anzeige in dem Detailansichtbereich (500) fixiert bleibt.

8. Verfahren nach Anspruch 6, wobei der Schritt eines Steuerns (1117) einer Scrolling-Betätigung den folgenden Schritt umfasst:
Erfassen (1113), wenn die Interaktion (1103) ist, eine Scrolling-Betätigung in dem Detailansichtbereich (500) zu steuern, eines Bereichs, wo die Interaktion (1103) beginnt.

9. Verfahren nach Anspruch 8, wobei der Schritt eines Steuerns (1117) einer Scrolling-Betätigung den folgenden Schritt umfasst:
Ignorieren (1119) der Interaktion, wenn die Interaktion in einem ersten Informationsanzeigebereich (530) beginnt.

10. Verfahren nach Anspruch 8, wobei der Schritt eines Steuerns (1117) einer Scrolling-Betätigung die folgenden Schritte umfasst:
Ausführen (1117) einer Scrolling-Betätigung in dem zweiten Informationsanzeigebereich (550) gemäß der Interaktion (1103), wenn die Interaktion (1103) in dem zweiten Informationsanzeigebereich (550) beginnt; und
Fixierthalten der Informationen in dem ersten Informationsanzeigebereich (530) und dem Listenansichtbereich (400).

11. Verfahren nach Anspruch 8, wobei der Schritt eines Steuerns (1117) einer Scrolling-Betätigung den folgenden Schritt umfasst:
Fortsetzen der Ausführung des Befehls, der zuerst gemäß einer Interaktion (1103) ausgeführt wurde, die in einem von dem ersten Informationsanzeigebereich (530) und dem zweiten Informationsanzeigebereich (550) beginnt und zu dem anderen von dem ersten Informationsanzeigebereich (530) und dem zweiten Informationsanzeigebereich (550) bewegt.

12. Verfahren nach Anspruch 11, wobei der Schritt eines Fortsetzens der Ausführung eines Befehls die folgenden Schritte umfasst:
Fortsetzen der Scrolling-Betätigung, die in dem zweiten Informationsanzeigebereich (550) begonnen hatte, wenn eine Interaktion (1103) in dem zweiten Informationsanzeigebereich (550) beginnt und zu dem ersten Informationsanzeigebereich (530) bewegt; und
Ignorieren der Interaktion (1103), wenn die Interaktion (1103) in dem ersten Informationsanzeigebereich (530) beginnt und zu dem zweiten Informationsanzeigebereich (550) bewegt.

13. Touch-Vorrichtung, umfassend:
eine Anzeigeeinheit (120) zum Anzeigen einer höheren Ebene und einer unteren Ebene einer Kontaktliste über mindestens zwei separate Ansichtbereiche (400, 500); und
eine Steuereinheit (140) zum Steuern der Anzeige der Kontaktliste an der Anzeigeeinheit (120), wobei die Steuereinheit (140) angepasst ist, um die Anzeigeeinheit (120) zu steuern, um eine Liste einer höheren Ebene umfassend eine Vielzahl von Kontakten auf derselben Ebene in einem ersten Ansichtbereich (400) anzuzeigen, und
wobei die Steuereinheit (140) ferner angepasst ist, um, wenn ein Kontakt auf der höheren Ebene der Kontaktliste gemäß einer Interaktion eines Benutzers ausgewählt wird, eine untere Ebene des Kontakts zu überprüfen, und um die Anzeigeeinheit (120) zu steuern, um, wenn die überprüfte untere Ebene die unterste Ebene ist, detaillierte Informationen in Bezug auf den Kontakt in einem zweiten Ansichtbereich (500) anzuzeigen, und um, wenn die überprüfte untere Ebene nicht die unterste Ebene ist, eine Liste einer noch weiter unteren Ebene umfassend eine Vielzahl von Kontakten auf derselben Ebene in dem zweiten Ansichtbereich (500) anzuzeigen.

14. Touch-Vorrichtung nach Anspruch 13, wobei die Steuereinheit (140) angepasst ist, um gemäß einer Interaktion, die auf einen der Ansichtbereiche (400, 500) angewendet wird, zwischen der höheren Ebene und der unteren Ebene umzuschalten, und für eine Scrolling-Betätigung in dem Ansichtbereich.

15. Touch-Vorrichtung nach Anspruch 13, wobei die Ansichtbereiche (400, 500) Folgendes umfassen:
eine Listenansichtbereich (400), der angepasst ist, um eine Liste entsprechend der höheren Ebene anzuzeigen; und
einen Detailansichtbereich (500), der angepasst ist, um Kontaktinformationen oder eine untere Liste entsprechend der unteren Ebene anzuzeigen,
wobei der Detailansichtbereich (500) Folgendes umfasst:
einen ersten Informationsanzeigebereich (530), der angepasst ist, um repräsentative Informationen der Kontaktinformationen anzuzeigen; und
einen zweiten Informationsanzeigebereich (550), der angepasst ist, um zusätzliche Informationen der Kontaktinformationen anzuzeigen.

16. Touch-Vorrichtung nach Anspruch 15, wobei die Steuereinheit zu (140) Folgendem angepasst ist:
Ignorieren einer Interaktion, die in dem ersten Informationsanzeigebereich (530) beginnt; und
Ausführen einer Scrolling-Betätigung gemäß einer Interaktion, die in dem zweiten Informationsanzeigebereich (550) beginnt.

## Revendications

1. Procédé de présentation d'une liste de contacts, utilisable dans une unité de commande (140), le procédé comprenant les étapes de :
affichage (903), quand un menu d'annuaire téléphonique est sélectionné (903), d'une liste de contacts sur un écran (120) ; et
présentation d'un niveau supérieur et d'un niveau inférieur de la liste de contacts via au moins deux zones de visualisation séparées (400, 500) pendant l'affichage de l'écran de liste de contacts,
dans lequel l'étape de présentation d'un niveau supérieur de la liste de contacts comprend l'affichage d'une liste de niveau supérieur comprenant une pluralité de contacts sur le même niveau dans une première zone de visualisation (400), et
dans lequel l'étape de présentation d'un niveau inférieur de la liste de contacts comprend les étapes de :
vérification (909), quand un contact dans le niveau supérieur de la liste de contacts est sélectionné (907) en fonction d'une interaction (905) d'un utilisateur, d'un niveau inférieur du contact ;
affichage (913), quand le niveau inférieur vérifié est le niveau le plus bas, des informations de contact dans une deuxième zone de visualisation (500) ; et
affichage (915), quand le niveau inférieur vérifié n'est pas le niveau le plus bas, d'une liste de niveau encore plus bas comprenant une pluralité de contacts sur le même niveau dans la deuxième zone de visualisation (500).

2. Procédé selon la revendication 1, dans lequel les zones de visualisation (400, 500) comprennent :
une zone de visualisation de liste (400) affichant une liste correspondant au niveau supérieur ; et
une zone de visualisation de détail (500) affichant des informations de contact ou une liste inférieure correspondant au niveau inférieur,
dans lequel la zone de visualisation de détail (500) affiche des informations représentatives des informations de contact sur une première zone d'affichage d'informations (530) et des informations supplémentaires des informations de contact sur une deuxième zone d'affichage d'informations (550).

3. Procédé selon la revendication 2, comprenant en outre l'étape de :
basculement (925, 929) entre le niveau supérieur et le niveau inférieur,
en fonction d'une interaction (905) appliquée à l'une de la zone de visualisation de liste (400) et de la zone de visualisation de détail (500),
dans lequel l'étape de basculement (925, 929) comprend l'étape de :
affichage (927, 931), quand l'interaction (905) est de sélectionner (917) un contact particulier dans la zone de visualisation de liste (400), des informations de contact ou une liste inférieure du contact particulier à l'intérieur de la zone de visualisation de détail (500).

4. Procédé selon la revendication 3, dans lequel l'étape d'affichage (927, 931) d'informations de contact ou d'une liste inférieure comprend les étapes de :
affichage (927), quand un niveau inférieur du contact particulier est le niveau le plus bas, des informations de contact associées au contact particulier dans la zone de visualisation de détail (500) ; et
affichage (931), quand un niveau inférieur du contact particulier n'est pas le niveau le plus bas, de la liste inférieure dans la zone de visualisation de détail (500).

5. Procédé selon la revendication 3, dans lequel l'étape de basculement (925, 929) entre le niveau supérieur et le niveau inférieur comprend les étapes de :
déplacement (925, 929), quand l'interaction est de sélectionner un contact particulier dans la zone de visualisation de détail (500), de la liste de la zone de visualisation de détail (500) vers la zone de visualisation de liste (400) et affichage de la liste déplacée comme le niveau supérieur ; et
affichage dans la zone de visualisation de détail (500) de l'un parmi : des informations de contact et une liste encore plus basse associée au contact particulier.

6. Procédé selon la revendication 2, comprenant en outre l'étape de :
commande (1107) d'une opération de défilement dans la zone de visualisation de liste (400) ou de la zone de visualisation de détail (500) en fonction d'une interaction (1103) appliquée à la zone de visualisation de liste (400) ou la zone de visualisation de détail (500).

7. Procédé selon la revendication 6, dans lequel l'étape de commande (1107) d'une opération de défilement comprend l'étape de :
exécution (1107), quand l'interaction (1103) est de commander une opération de défilement dans la zone de visualisation de liste (400), de l'opération de défilement dans la zone de visualisation de liste (400) en fonction de l'interaction (1103), tout en maintenant l'affichage de la zone de visualisation de détail (500) fixe.

8. Procédé selon la revendication 6, dans lequel l'étape de commande (1117) d'une opération de défilement comprend l'étape de :
détection (1113), quand l'interaction (1103) est de commander une opération de défilement dans la zone de visualisation de détail (500), d'une zone dans laquelle l'interaction (1103) débute.

9. Procédé selon la revendication 8, dans lequel l'étape de commande (1117) d'une opération de défilement comprend l'étape de :
ignorance (1119) de l'interaction quand l'interaction débute dans une première zone d'affichage d'informations (530).

10. Procédé selon la revendication 8, dans lequel l'étape de commande (1117) d'une opération de défilement comprend les étapes de :
exécution (1117) d'une opération de défilement dans la deuxième zone d'affichage d'informations (550) en fonction de l'interaction (1103) quand l'interaction (1103) débute dans la deuxième zone d'affichage d'informations (550) ; et
maintien des informations dans la première zone d'affichage d'informations (530) et la zone de visualisation de liste (400) fixes.

11. Procédé selon la revendication 8, dans lequel l'étape de commande (1117) d'une opération de défilement comprend l'étape de :
poursuite de l'exécution d'une commande qui a d'abord été exécutée en fonction d'une interaction (1103) qui débute dans l'une de la première zone d'affichage d'informations (530) et la deuxième zone d'affichage d'informations (550) et se déplace vers l'autre de la première zone d'affichage d'informations (530) et la deuxième zone d'affichage d'informations (550).

12. Procédé selon la revendication 11, dans lequel l'étape de poursuite de l'exécution d'une commande comprend les étapes de :
poursuite de l'opération de défilement qui a été débutée dans la deuxième zone d'affichage d'informations (550) quand une interaction (1103) débute dans la deuxième zone d'affichage d'informations (550) et se déplace vers la première zone d'affichage d'informations (530) ; et
ignorance de l'interaction (1103), quand l'interaction (1103) débute dans la première zone d'affichage d'informations (530) et se déplace vers la deuxième zone d'affichage d'informations (550).

13. Dispositif tactile comprenant :
une unité d'affichage (120) destinée à afficher un niveau supérieur et un niveau inférieur d'une liste de contacts via au moins deux zones de visualisation séparées (400, 500) ; et
une unité de commande (140) destinée à commander l'affichage de la liste de contacts sur l'unité d'affichage (120),
dans lequel l'unité de commande (140) est adaptée pour commander à l'unité d'affichage (120) d'afficher une liste de niveau supérieur comprenant une pluralité de contacts sur le même niveau dans une première zone de visualisation (400), et
dans lequel l'unité de commande (140) est en outre adaptée pour vérifier, quand un contact dans le niveau supérieur de la liste de contacts est sélectionné en fonction d'une interaction d'un utilisateur, un niveau inférieur du contact, et pour commander à l'unité d'affichage (120) d'afficher, quand le niveau inférieur vérifié est le niveau plus bas, des informations concernant le contact dans une deuxième zone de visualisation (500), et pour afficher, quand le niveau inférieur vérifié n'est pas le niveau le plus bas, une liste de niveau encore plus bas comprenant une pluralité de contacts sur le même niveau dans la deuxième zone de visualisation (500).

14. Dispositif tactile selon la revendication 13, dans lequel l'unité de commande (140) est adaptée pour basculer entre le niveau supérieur et le niveau inférieur, en fonction d'une interaction appliquée à l'une des zones de visualisation (400, 500), et pour défiler l'opération dans la zone de visualisation.

15. Dispositif tactile selon la revendication 13, dans lequel les zones de visualisation (400, 500) comprennent :
une zone de visualisation de liste (400) adaptée pour afficher une liste correspondant au niveau supérieur ; et
une zone de visualisation de détail (500) adaptée pour afficher des informations de contact ou une liste inférieure correspondant au niveau inférieur,
dans lequel la zone de visualisation de détail (500) comprend :
une première zone d'affichage d'informations (530) adaptée pour montrer des informations représentatives des informations de contact ; et
une deuxième zone d'affichage d'informations (550) adaptée pour montrer des informations supplémentaires des informations de contact.

16. Dispositif tactile selon la revendication 15, dans lequel l'unité de commande est adaptée pour (140) :
ignorer une interaction qui débute dans la première zone d'affichage d'informations (530) ; et
exécuter une opération de défilement en fonction d'une interaction qui débute dans la deuxième zone d'affichage d'informations (550).
